# EUROPEAN PATENT SPECIFICATION

(11) **EP 2 073 445 B1**
(45) Date of publication and mention of the grant of the patent: **16.07.2014**
(21) Application number: 07150381.7
(22) Date of filing: 21.12.2007
(51) Int. Cl.: H04L 12/28

(54) **Method, base station, mobile station, telecommunication system, and computer program for detecting a WLAN**
Verfahren, Basisstation, Mobilstation, Telekommunikationssystem und Computerprogramm zur Detektion eines WLANs
Procédé, station de base, station mobile, système de télécommunication, et programme informatique pour détecter un réseau local

(43) Date of publication of application: 24.06.2009
(73) Proprietor: Telefonaktiebolaget LM Ericsson (publ), 164 83 Stockholm (SE)
(72) Inventor: Johannesson, Regina, 226 47, Lund (SE); Hedberg, Anne-Lott, 226 47, Lund (SE)
(74) Representative: Althoff, Fredrik

(56) References cited:
- EP-A- 1 441 468
- WO-A-2006/047862
- US-A1- 2004 165 563

## Description

### Technical field

The present invention relates to a method of operating a base station, such a base station, a mobile station, a telecommunication system, and a computer program. In particular, the present invention relates to an improved approach for a cellular network and a generic access network present within the coverage area of the cellular network.

### Background

Generic Access Network (GAN) is a technology that enables telecommunication service, such as GSM and WCDMA service, to be delivered over broadband access network and wireless local area network (WLAN) or Bluetooth wireless technology.

Cellular phones or other similar mobile equipment with capabilities for GAN communication, e.g. via WLAN, normally search for access to WLAN and/or Bluetooth access points, continuously or periodically. This has been found to consume a non-negligible amount of battery power. Therefore, attempts have been made for power saving purposes, where the cellular system indicates if there is a WLAN reported to be present in the cell in which a mobile station is operating, e.g. as disclosed in WO 2007/117190 A1 or US 2004/0165563 A1. US 2004/0165563 A1 discloses a method and apparatus for detection and selection of WLAN service. A remote station may scan for a cellular paging indicator and a WLAN beacon using one or two tuners. When WLAN coverage is available, a packet data session may be transferred thereto.

Thus, if no WLAN is present, the mobile station does not need to waste energy on searching for it. However, for some situations, a telecommunication cell may cover an area of about 7500 km², as for CDMA450, while the WLAN may only cover a few hundred square meters. In such cases, it can be questioned if the information that a WLAN is present in the cell is of any use, and may also be extra annoying if the user of the mobile station think that her mobile station is working in a power save mode, and then drains the battery anyway, and most probably without finding the announced WLAN. Therefore, there is a need to improve efficiency in WLAN searching with regard to power consumption.

### Summary

The present invention is based on the understanding that a mobile station may waste a lot of energy, and thus a lot of its battery capacity, by searching for a WLAN for access to generic access networks (GAN) communication, although there may not be an available WLAN. The present invention is further based on the understanding that a mobile station normally perform information gaining about its cellular environment. The inventors have by the above demonstrated understandings, and provision of a design using the cellular mechanisms for providing awareness in the mobile station about when a WLAN is available. The inventors have not only found that this will reduce power consumption, it will also increase predictability of success to access the WLAN for the user of the mobile station.

According to a first aspect of the present invention, there is provided a method comprising operating a cellular base station, the operating consisting of providing synchronisation for mobile stations; and broadcasting information comprising information about an access point which access point enables generic access network, GAN, communication by wireless local area network or Bluetooth wireless technology. The cellular base station is operating a pure broadcasting telecommunication cell, wherein an access area of the access point and the pure broadcasting telecommunication cell cover essentially the same area, such that mobile stations able to receive the broadcasting information become aware of accessibility to the access point. An advantage of this is that the mobile station does not have to perform search for WLAN access until it has been aware of WLAN availability by cellular mechanisms. This approach saves power compared to continuously searching for WLAN access according to traditional approaches.

The broadcasted information may further comprise advertising information. Here, advertising means not strictly to sell a product or service to the general public but may include political parties, interest groups, militaries, or other organizations looking for new recruits, organizations providing information, public service announcements, etc. An advantage of this is that the mobile station can get local information by the announcements. Another advantage is that WLAN provision can be advertisement sponsored. A further advantage is that the advertising can enable more user-friendly operation for accessing the WLAN, e.g. the advertising information may include help information for establishing connection to the WLAN.
The method may further comprise providing information about the pure broadcasting telecommunication cell by another cellular base station operating another telecommunication cell, wherein the another telecommunication cell has considerably larger coverage area than an access area of the access point and than the pure broadcasting telecommunication cell, and the pure broadcasting cell is substantially located within the another telecommunication cell. An advantage of this is that the mobile station gains knowledge about the pure broadcasting telecommunication cell from a cell, which the mobile station may already be in communication with. The providing of information about the pure broadcasting telecommunication cell may further comprise including the pure broadcasting telecommunication cell within a neighbour cell list; and providing the neighbour cell list to mobile stations within or in vicinity to the another telecommunication cell. An advantage of this is that an already existing tool for gaining knowledge about cells is used to provide the awareness of the pure broadcasting telecommunication cell, and thus the available WLAN.

According to a second aspect of the present invention, there is provided an arrangement comprising an access point and a cellular base station arranged to operate a pure broadcasting telecommunication cell, the cellular base station comprising a transmitter arranged to broadcast information about the access point which access point enables generic access network, GAN, communication by wireless local are network or Bluetooth wireless technology, wherein the cellular base station is arranged together with the access point such that the pure broadcast telecommunication cell and the access area of the access point cover essentially the same area. An advantage of this is an economically feasible base station for operating a pure broadcasting telecommunication cell, which has limited functionality compared to a normal telecommunication cell. A further advantage is that such a base station is suitable for co-location and co-operation with a WLAN access point.

The pure broadcasting telecommunication cell may be arranged substantially within another telecommunication cell operated by another cellular base station. The another telecommunication cell may have considerably larger coverage area than an access area of the access point, and than the pure broadcasting telecommunication cell. Information about the pure broadcasting telecommunication cell may be provided from the another cellular base station of the another telecommunication cell. The base may further be arranged to broadcast advertising information. The advantages of this are similar to what is demonstrated for similar features of the first aspect of the present invention.

According to a third aspect of the present invention, there is provided a mobile station having both abilities for cellular communication and generic access network, GAN, communication by wireless local area network or Bluetooth wireless technology, the mobile station having a mode of operation where the mobile station is arranged to, when operating in the operation mode, synchronise with a pure broadcasting cellular base station; and receive broadcast messaging from the pure broadcasting cellular base station about an access point of a GAN from the pure broadcasting cellular base station operating a pure broadcasting telecommunication cell wherein an access area of the access point and the pure broadcasting telecommunication cell cover essentially the same area such that when the mobile station is able to receive the broadcasting information becomes aware of accessibility to the access point. An advantage of this is that the mobile station does not have to perform search for WLAN access until it has been aware of WLAN availability by cellular mechanisms. This approach saves power compared to continuously searching for WLAN access according to traditional approaches.

The mobile station is further arranged to enable entering the secondary mode of operation upon reception of information about presence of the pure broadcasting telecommunication cell from a cellular base station operating a presently operating two-way telecommunication cell having considerably larger coverage area than the access area of the access point and than the pure broadcasting telecommunication cell, the reception comprising information about the pure broadcasting telecommunication cell located substantially within the presently operating telecommunication cell. An advantage of this is a mobile station able to handle base stations according to the second aspect of the present invention.

The mobile station may further be arranged to start accessing the WLAN for GAN communication when the broadcasting information about the access point is received from the pure broadcasting cellular base station. The mobile station may further be arranged to receive broadcasted advertising information from the pure broadcasting cellular base station. The mobile station may further be arranged to receive a neighbour cell list comprising information about the pure broadcasting telecommunication cell. Advantages of this are similar to what is demonstrated for similar features of the first aspect of the present invention.

According to a fourth aspect of the present invention, there is provided a telecommunication system comprising an arrangement according to the second aspect; and at least a mobile station according to the third aspect of the present invention arranged to operate with the cellular base station, and the access point.

The telecommunication system may further comprise at least another cellular base station arranged to operate a cell for telecommunication, the another cellular base station providing information about the pure broadcasting telecommunication cell, wherein the pure broadcasting telecommunication cell is located substantially within an area of the cell for telecommunication, and wherein the cell for telecommunication has considerably larger coverage area than the access area of the access point and than the pure broadcasting telecommunication cell. The advantages of these features are similar to what is demonstrated for similar features of the first aspect of the present invention.

According to a fifth aspect of the present invention, there is provided a computer program comprising instructions, which when executed by a processor are arranged to cause the processor to perform the method according to the first aspect of the present invention. Advantages of this are similar to what is demonstrated for similar features of the first aspect of the present invention.

### Brief description of drawings

Fig. 1 illustrates a part of a cellular telecommunication system according to an embodiment of the present invention with a base station co-located with an access point.
Fig. 2 illustrates a part of a cellular telecommunication system according to an embodiment of the present invention with a base station operating a cell.
Fig. 3 illustrates a part of a cellular telecommunication system according to an embodiment of the present invention with a plurality of cells operated by base stations.
Fig. 4 is a schematic block diagram functionally illustrating a pure broadcasting base station according to an embodiment of the present invention.
Fig. 5 is a schematic state diagram indicating operation modes of a mobile station present in a telecommunication cell.
Fig. 6 is a schematic block diagram functionally illustrating a pure broadcasting base station according to an embodiment of the present invention.
Fig. 7 is a flow chart schematically illustrating a method for operating the pure broadcasting base station.
Fig. 8 is a flow chart schematically illustrating a method for providing information about the pure broadcasting telecommunication cell.

### Detailed description of embodiments

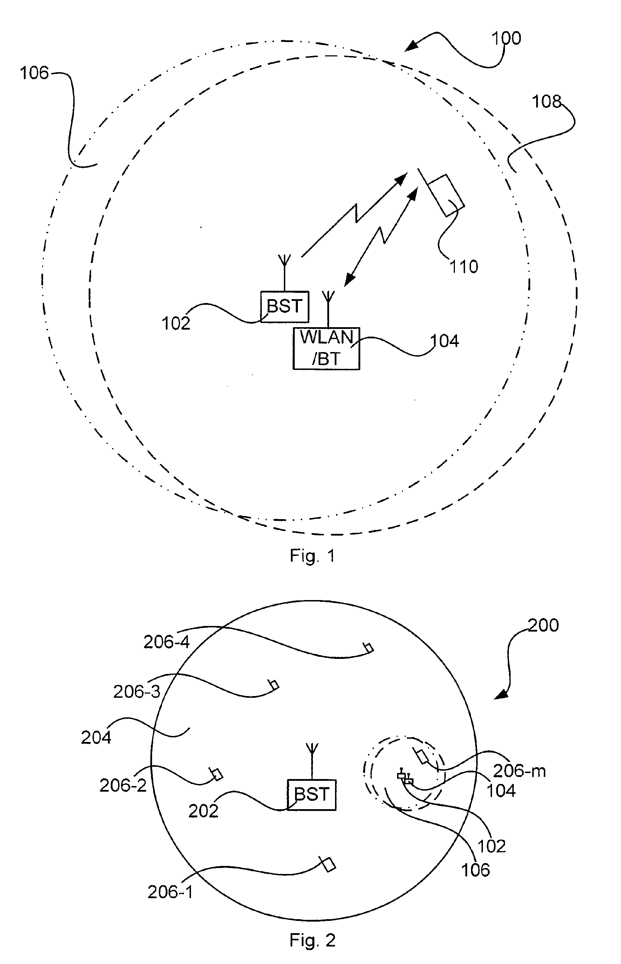

Figs 1 to 3 illustrate receivers and transmitters in an exemplary environment of telecommunication cells and coverage areas of radio communication equipment. These are depicted to illustrate the principles of the invention, and the drawings are not to be considered to be drawn into scale.

Fig. 1 illustrates a part of a cellular telecommunication system 100 according to an embodiment of the present invention with a base station 102 co-located with an access point 104 for generic access network (GAN) communication, such as wireless local area network, Bluetooth, etc., transceiver, such that a cell 106 provided by the base station 102 cover essentially the same area as the access area 108 of the access point 104. The base station 102 is a pure broadcasting telecommunication base station, i.e. there is no handover to the base station 102 from a base station on which a mobile station 110 is camping. Instead, the mobile station only synchronises with the base station 102 to be able to receive broadcasting messaging from the base station 102. The broadcasting messaging comprises information about the access point 104. Since the access area 108 and the cell 106 cover essentially the same area, the mobile station 110 will gain knowledge that access to the access point 104 is possible or at least likely as it is possible to synchronise with the base station 102 and receive broadcasting messaging from the base station 102. The broadcasting messaging preferably comprises information about accessing the access point 104, such as protocol, frequencies, etc.

Fig. 2 illustrates a part of a cellular telecommunication system 200 according to an embodiment of the present invention with a base station 202 operating a cell 204. In the cell 204, several mobile stations 206-1, 206-2, ..., 206-m may be present and be camping on the base station 202, i.e. being in communication with the base station 202 for service according to the abilities of the cellular telecommunication system 200, such as placing or receiving calls, messaging, data communication, etc.

Within the cell 204, there is a pure broadcasting base station 102 co-located with an access point 104, as demonstrated with reference to Fig. 1. The base station 202 provides a neighbour cell list to the mobile stations, which comprises information about the surrounding cells (not shown), and also about the pure broadcasting cell 106. In the neighbour cell list, there is preferably an indication that the pure broadcasting cell 106 is not able for handover. Preferably, there is also information about frequencies, codes, etc. for enabling listening to the pure broadcasting base station 102.

As the mobile stations 206-1, 206-2, ..., 206-m have the neighbour cell list, they are able to listen for the pure broadcasting base station 102, and when any of the mobile stations 206-1, 206-2, ..., 206-m is able to receive signals from the pure broadcasting base station 102, and thus able to synchronise and receive broadcasting messaging, it may also access the access point 104 based on the information given by the broadcasting messaging. Thus, the mobile stations do not need to scan for WLAN access on frequencies for WLAN and only need to use the already running mechanism for cellular neighbour cell awareness to gain knowledge if there is an accessible WLAN. Therefore, power can be saved compared to continuously scanning on any available frequencies for WLAN access.

In more detail, information about the pure broadcasting cell operated by the pure broadcasting base station 102 that mobile stations 206-1, 206-2, ..., 206-m acquires in order to gain knowledge is a cell indicating presence of the access point 104. This information can comprise an identification of the pure broadcasting cell, absolute frequency channel number, base station identity code. The information can be sent directly to a mobile station in question on control information channels, or in a message over messaging services to be activated by the user or an application of the mobile station. This can make the mobile station start acquiring synchronisation information from the pure broadcasting cell, while some mobile stations, e.g. which are not enabled to GAN communication, will ignore the pure broadcasting cell since it for them is just a barred cell on which it is not enabled to be in communication with in ordinary ways for a mobile station in a cellular communication network. Indication on the cell being a barred cell can be comprised in the synchronisation information, e.g. by transmitting only a limited set of synchronisation information.

To further provide simplicity to the handling of pure broadcasting cells, high reuse of frequencies for the pure broadcasting cells can be preferable, e.g. all pure broadcasting cells being assigned the same frequency.

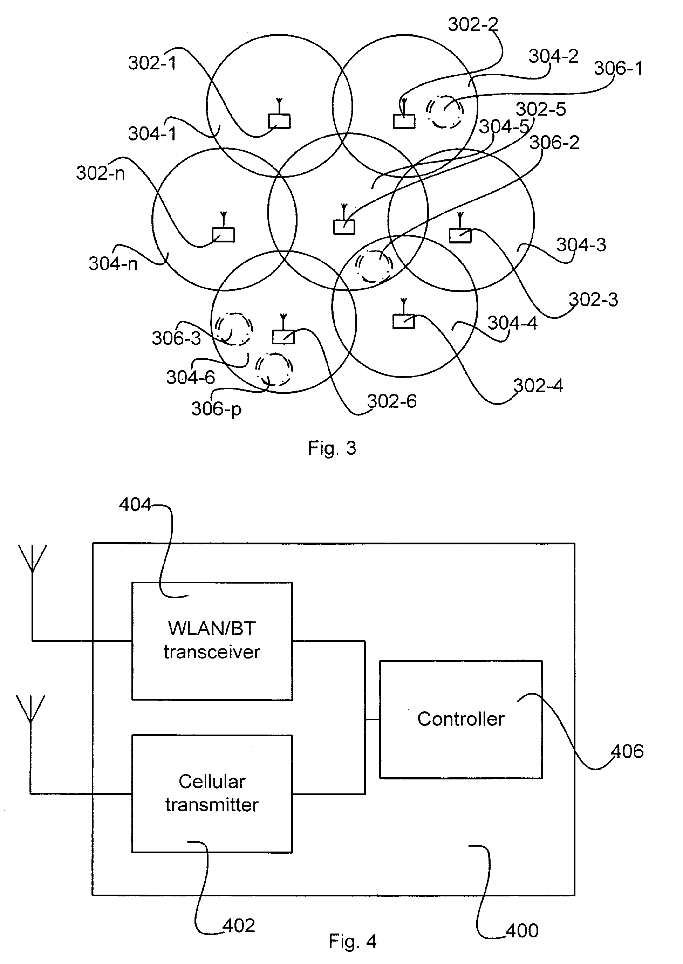

Fig. 3 illustrates a part of a cellular telecommunication system 300 according to an embodiment of the present invention with a plurality of cells 302-1, 302-2, ..., 302-n operated by base stations 304-1, 304-2, ..., 304-n, respectively. In some of the cells 302-2, 302-4, 302-5, 302-6, there are one or more pure broadcasting cells 306-1, 306-2, 306-3, ..., 306-p present substantially within the cells 302-1, 302-4, 302-5, 302-6. As demonstrated with reference to Fig. 1, the pure broadcasting cells are co-located with access points such that their coverage areas substantially overlap. For example, a cell 302-6 can have several such pure broadcasting cells 306-3, ..., 306-p within its area, a pure broadcasting cell 306-2 can be present substantially within two neighbouring cells 302-4, 302-5, i.e. the pure broadcasting cell 306-2 is located in a boundary zone between the neighbouring cells 302-4, 302-5, and a cell 302-2 can have a single pure broadcasting cell 306-1 within its area.

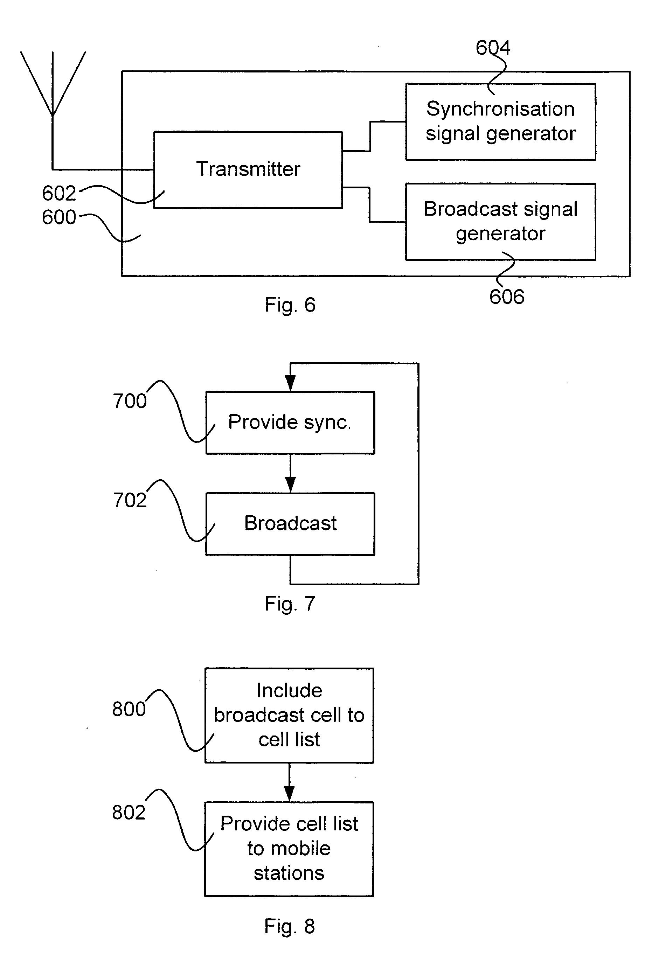

Fig. 4 is a schematic block diagram functionally illustrating a pure broadcasting base station 400 according to an embodiment of the present invention. The base station 400 comprises a cellular transmitter 402 arranged to broadcast information about an access point enabling GAN communication, with a WLAN transceiver 404. It can be arranged as depicted in Fig. 4, i.e. as a joint cellular and WLAN unit, or be in separate, but co-located units, wherein the base station 400 is arranged together with the access point such that the pure broadcast telecommunication cell and the access area of the access point cover essentially the same area. Such an embodiment of the cellular part will be further described with reference to Fig. 6. Returning to Fig. 4, here, the term "cellular transmitter" means that it is a transmitter performing parts of acts normally performed in a cellular base station, e.g. a Node B, but these acts are limited to transmitting signals, i.e. no two-way communication is provided. Thus, no handover is possible to the cellular transmitter 402. On the other hand, the cellular transmitter 402 provides sending of synchronisation and broadcasting signals, and is assigned a cell identification such that its presence can be indicated in a neighbour cell list used in the cellular system. The functions of the cellular transmitter and the WLAN transceiver can be controlled by a controller 406. However, the controller 406 should be construed functionally, and can also be a controller in each of the access point holding the WLAN transceiver 404, and the base station holding the cellular transmitter 402. These controllers can be in communication with each other for controlling their joint functions, such as assignment of frequencies, codes, and/or protocols. Further, these controllers need not to be in communication with each other if their joint functions are predetermined, and their operations can be performed without any communication them between.

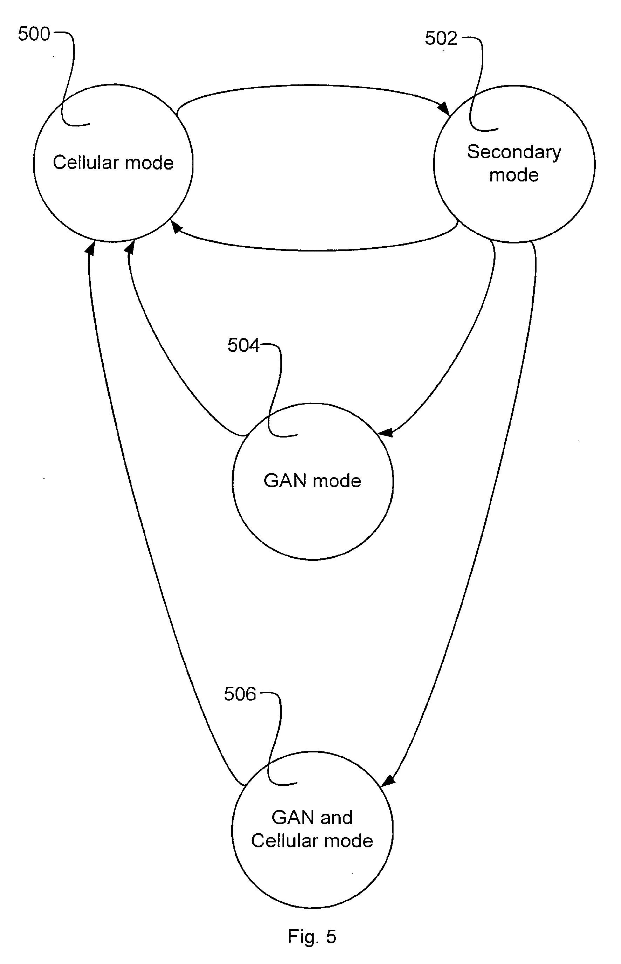

Fig. 5 is a schematic state diagram indicating operation modes of a mobile station present in a telecommunication cell, e.g. as the one depicted in Fig. 2, wherein one or more pure broadcasting telecommunication base stations co-located with access points as demonstrated above are present. When the mobile station is working in a normal cellular mode 500, i.e. being in communication with a base station of the cell in ordinary ways for a mobile station in a cellular communication network, popularly called "camping on the base station", the mobile station becomes aware of presence of a pure broadcasting base station through the information given in a neighbour list provided by the base station on which the mobile station is camping. Based on this, the mobile station can enter a secondary mode of operation 502 consisting of synchronisation with the pure broadcasting base station, if the signals transmitted by the pure broadcasting base station can be received by the mobile station at its present location. If not, the mobile station returns to the normal cellular mode 500. If synchronisation successful, the mobile station, which is arranged for reception of broadcast messaging from the pure broadcasting base station about an access point, receives broadcasting messaging from the pure broadcasting base station operating the pure broadcasting telecommunication cell. As an access area of the access point and the pure broadcasting telecommunication cell cover essentially the same area, the mobile station able to receive the broadcasting information becomes aware of accessibility to the access point. Then, the mobile station can enter either a pure GAN communication mode 504, i.e. communication is handed over to the WLAN access point, or the mobile station can enter a combined cellular and GAN communication mode 506, where communication is performed both via the WLAN access node and the ordinary cellular system via the base station on which it is camping. It is also possible that the mobile station, although WLAN communication is possible, chooses to not perform any GAN communication, and then the mobile station returns to the normal cellular mode 500. The mobile station is also arranged to return to the normal cellular mode 500 from the GAN communication mode 504, or from the combined cellular and GAN communication mode 506.

It is to be noted that, although WLAN has been used as example above, Bluetooth wireless technology can be used in a similar way for the access point to provide access to a generic access network controller.

Fig. 6 is a schematic block diagram functionally illustrating a pure broadcasting base station 600 according to an embodiment of the present invention. The base station 600 comprises a cellular transmitter 602 arranged to broadcast information about an access point. The base station 600 is preferably co-located with an access point such that the pure broadcast telecommunication cell and the access area of the access point cover essentially the same area. The transmitter 602 is provided with a synchronisation signal to be transmitted from a synchronisation signal generator 604. The transmitter 602 is also provided with a broadcasting signal to be transmitted from a broadcasting signal generator 606. The synchronisation signal and the broadcasting signal are transmitted on a synchronisation channel and a broadcasting channel, respectively, according to the specifications of the cellular system in which the base station 600 is arranged to work.

Fig. 7 is a flow chart schematically illustrating a method for operating the pure broadcasting base station described above with reference to Figs 4 and 6. The operation consist of providing synchronisation for mobile stations in a synchronisation provision step 700, and broadcasting information comprising information about an access point, in a broadcasting step 702.

Fig. 8 is a flow chart schematically illustrating a method for providing information about the pure broadcasting telecommunication cell described above with reference to Figs 4 and 6. It is performed by another base station operating another telecommunication cell as described with reference to Figs 2 and 3, wherein the another telecommunication cell has considerably larger coverage area than an access area of the access point and than the pure broadcasting telecommunication cell, and the pure broadcasting cell is substantially located within the another telecommunication cell. The information provision comprises including the pure broadcasting cell, i.e. an identification of the pure broadcasting cell and preferably relevant parameters for the pure broadcasting cell, such as frequencies, codes, etc., in a neighbour cell list in a neighbour cell list generation step 800. This step 800 is preferably performed at system setup. The information provision further comprises a neighbour cell list provision step 802 where the generated neighbour cell list is provided to mobile stations camping on the another base station. Thus, this step 802 is performed frequently during operation of the cellular telecommunication system.

The apparatuses of the present invention are implementable with hardware, but the operation of the apparatuses are preferable performed with aid of software. The computer program preferably comprises program code, which is stored on a computer readable medium, which can be loaded and executed by a processing means to cause it to perform the above described methods comprising operating a base station, the operating consisting of providing synchronisation for mobile stations, and broadcasting information comprising information about an access point from the base station operating a pure broadcasting telecommunication cell.

The program code can further cause the processing means to perform providing information about the pure broadcasting telecommunication cell by another base station operating another telecommunication cell. The program code can further cause the processing means to include the pure broadcasting telecommunication cell within a neighbour cell list, and provide the neighbour cell list to mobile stations within or in vicinity to the another telecommunication cell. The program code can further cause the processor to include advertising information into the information to be broadcasted. Here, advertising means not strictly to sell a product or service to the general public but may include political parties, interest groups, militaries, and other organizations looking for new recruits, organizations providing information, and public service announcements.

The program code can also be arranged to operate the mobile station as demonstrated above with reference to Fig. 5. The processing means and computer program product can be arranged to execute the program code sequentially where actions are performed stepwise, but mostly be arranged to execute the program code on a real-time basis where actions are performed upon need and availability of data. The processing means is preferably what normally is referred to as an embedded system.

## Claims

1. A method comprising
operating a cellular base station (102, 400, 600), the operating consisting of
providing synchronisation (700) for mobile stations (110, 206-m); and
broadcasting (702), from the cellular base station, information comprising information about an access point (104) which access point enables generic access network, GAN, communication by wireless local area network or Bluetooth wireless technology
**characterised in that** the cellular base station is operating a pure broadcasting telecommunication cell (106, 306-1...306-p), wherein an access area (108) of the access point and the pure broadcasting telecommunication cell cover essentially the same area, such that mobile stations able to receive the broadcasting information become aware of accessibility to the access point.

2. The method according to claim 1, wherein the broadcasted information further comprises advertising information.

3. The method according to claim 1 or 2, further comprising
providing information about the pure broadcasting telecommunication cell by another cellular base station (202, 302-1...302-n) operating another telecommunication cell (204, 304-1...304-n), wherein the another telecommunication cell has considerably larger coverage area than the access area of the access point and than the pure broadcasting telecommunication cell, and the pure broadcasting cell is substantially located within the another telecommunication cell.

4. The method according to claim 3, wherein the providing of information about the pure broadcasting telecommunication cell further comprises
including (800) the pure broadcasting telecommunication cell within a neighbour cell list; and
providing (802) the neighbour cell list to mobile stations within or in vicinity to the another telecommunication cell.

5. An arrangement comprising an access point (104) and a cellular base station (102, 400, 600) comprising a transmitter arranged to broadcast information about the access point (104) which access point enables generic access network, GAN, communication by wireless local area network or Bluetooth wireless technology
**characterised in that** the cellular base station is arranged to operate a pure broadcasting telecommunication cell (106, 306-1...306-p), and the cellular base station is arranged together with the access point such that the pure broadcast telecommunication cell and an access area (108) of the access point cover essentially the same area.

6. The arrangement according to claim 5, wherein
the pure broadcasting telecommunication cell is arranged substantially within another telecommunication cell (204, 304-1...304-n) operated by another cellular base station (202, 302-1...302-n),
the another telecommunication cell having considerably larger coverage area than the access area of the access point, and than the pure broadcasting telecommunication cell, and
information about the pure broadcasting telecommunication cell is provided from the another cellular base station of the another telecommunication cell,

7. The arrangement according to claim 5 or 6, further being arranged to broadcast advertising information.

8. A mobile station (110, 206-1...206-m) having both abilities for cellular communication and generic access network, GAN, communication, the mobile station having a mode of operation,
**characterised in that** the mobile station is arranged to, when operating in the mode of operation,
synchronise with a pure broadcasting cellular base station (102, 400, 600); and
receive broadcast messaging from the pure broadcasting cellular base station about an access point (104) which access point enables GAN communication by wireless local area network or Bluetooth wireless technology, from the pure broadcasting base station operating a pure broadcasting telecommunication cell (106, 306-1...306-p) wherein an access area (108) of the access point and the pure broadcasting telecommunication cell cover essentially the same area such that when the mobile station is able to receive the broadcasting information becomes aware of accessibility to the access point, wherein
the mobile station further is arranged to enable entering the mode of operation upon reception of information about presence of the pure broadcasting telecommunication cell from a cellular base station (202, 302-1...302-n) operating a presently operating two-way telecommunication cell (204, 304-1...304-n) having considerably larger coverage area than the access area of the access point and than the pure broadcasting telecommunication cell, the reception comprising information about the pure broadcasting telecommunication cell located substantially within the presently operating telecommunication cell.

9. The mobile station according to claim 8, further arranged to start accessing the GAN when the broadcasting information about the access point is received from the pure broadcasting cellular base station.

10. The mobile station according to any of claims 8 or 9, further being arranged to receive broadcasted advertising information from the pure broadcasting cellular base station.

11. The mobile station according to any of claims 8 or 9, further being arranged to receive a neighbour cell list comprising information about the pure broadcasting telecommunication cell.

12. A telecommunication system comprising
an arrangement according to any of claims 5 to 7; and
at least a mobile station (110, 206-1...206-m) according to any of claims 8 to 11 arranged to operate with the cellular base station, and the access point.

13. The telecommunication system according to claim 12, further comprising at least another cellular base station (202, 302-1...302-n) arranged to operate a cell (204, 304-1...304-n) for telecommunication, the another cellular base station providing information about the pure broadcasting telecommunication cell, wherein the pure broadcasting telecommunication cell is located substantially within an area of the cell for telecommunication, and wherein the cell for telecommunication has considerably larger coverage area than the access area of the access point and than the pure broadcasting telecommunication cell.

14. A computer program comprising instructions, which when executed by a processor are arranged to cause the processor to perform the method according to any of claims 1 to 4.

## Patentansprüche

1. Verfahren, umfassend:
Betreiben einer Zellularbasisstation (102, 400, 600), wobei das Betreiben aus einem Bereitstelen von Synchronisation (700) für Mobilstationen (110, 206-m) besteht; und
Senden per Broadcast (702) von der Zellularbasisstation von Informationen, welche Informationen über einen Zugangspunkt (104) umfassen, wobei der Zugangspunkt generische Zugangsnetz, GAN,-Kommunikation durch Drahtlostechnologie über drahtlose lokale Netze oder Bluetooth ermöglicht,
**dadurch gekennzeichnet, dass** die Zellularbasisstation eine reine Broadcast-Telekommunikationszelle (106, 306-1...306-p) betreibt, wobei ein Zugangsbereich (108) des Zugangspunkts und die reine Broadcast-Telekommunikationszelle im Wesentlichen den gleichen Bereich decken, derart dass Mobilstationen, die zum Empfangen der Broadcast-Informationen imstande sind, die Zugangsmöglichkeit zum Zugangspunkt erkennen.

2. Verfahren nach Anspruch 1, wobei die per Broadcast gesendeten Informationen ferner Werbeinformationen umfassen.

3. Verfahren nach Anspruch 1 oder 2, ferner umfassend:
Bereitstellen von Informationen über die reine Broadcast-Telekommunikationszelle durch eine andere Zellularbasisstation (202, 302-1...302-n), die eine andere Telekommunikationszelle (204, 304-1...304-n) betreibt, wobei die andere Telekommunikationszelle einen wesentlich größeren Versorgungsbereich als der Zugangsbereich des Zugangsknotens und als die reine Broadcast-Telekommunikationszelle aufweist, und die reine Broadcast-Zelle sich im Wesentlichen innerhalb der anderen Telekommunikationszelle befindet.

4. Verfahren nach Anspruch 3, wobei das Bereitstellen von Informationen über die reine Broadcast-Telekommunikationszelle ferner umfasst:
Aufnehmen (800) der reinen Broadcast-Telekommunikationszelle in eine Nachbarzellenliste; und
Bereitstellen (802) der Nachbarzellenliste für Mobilstationen innerhalb oder in der Nähe der anderen Telekommunikationszelle.

5. Anordnung, umfassend einen Zugangspunkt (104) und eine Zellularbasisstation (102, 400, 600), die einen Sender umfasst, der so ausgelegt ist, dass er Informationen per Broadcast über den Zugangspunkt (104) sendet, wobei der Zugangspunkt generische Zugangsnetz, GAN,-Kommunikation durch Drahtlostechnologie über drahtlose lokale Netze oder Bluetooth ermöglicht,
**dadurch gekennzeichnet, dass** die Zellularbasisstation so ausgelegt ist, dass sie eine reine Broadcast-Telekommunikationszelle (106, 306-1...306-p) betreibt, und die Zellularbasisstation zusammen mit dem Zugangspunkt angeordnet ist, derart dass die reine Broadcast-Telekommunikationszelle und ein Zugangsbereich (108) des Zugangspunkts im Wesentlichen den gleichen Bereich decken.

6. Anordnung nach Anspruch 5, wobei
die reine Broadcast-Telekommunikationszelle im Wesentlichen innerhalb einer anderen Telekommunikationszelle (204, 304-1...304-n) angeordnet ist, die durch eine andere Zellularbasisstation (202, 302-1...302-n) betrieben wird,
wobei die andere Telekommunikationszelle einen wesentlich größeren Versorgungsbereich als der Zugangsbereich des Zugangsknotens und als die reine Broadcast-Telekommunikationszelle aufweist, und
Informationen über die reine Broadcast-Telekommunikationszelle von der anderen Zellularbasisstation der anderen Telekommunikationszelle bereitgestellt werden.

7. Anordnung nach Anspruch 5 oder 6, die ferner so ausgelegt ist, dass sie Werbeinformationen per Broadcast sendet.

8. Mobilstation (110, 206-1...206-m) sowohl mit Fähigkeiten für zellulare Kommunikation als auch generische Zugangsnetz, GAN,-Kommunikation, wobei die Mobilstation einen Betriebsmodus aufweist,
**dadurch gekennzeichnet, dass** die Mobilstation, wenn sie im Betriebsmodus funktioniert, ausgelegt ist zum:
Synchronisieren mit einer reinen Broadcast-Zellularbasisstation (102, 400, 600); und
Empfangen von Broadcast-Nachrichtenübermittlung von der reinen Broadcast-Zellularbasisstation über einen Zugangspunkt (104), wobei der Zugangspunkt GAN-Kommunikation durch Drahtlostechnologie über drahtlose lokale Netze oder Bluetooth von der reinen Broadcast-Zellularbasisstation ermöglicht, die eine reine Broadcast-Telekommunikationszelle (106, 306-1...306-p) betreibt, wobei ein Zugangsbereich (108) des Zugangspunkts und der reinen Broadcast-Telekommunikationszelle im Wesentlichen den gleichen Bereich decken, derart dass die Mobilstation, wenn sie zum Empfangen der Broadcast-Informationen imstande ist, die Zugangsmöglichkeit zum Zugangspunkt erkennt, wobei
die Mobilstation ferner so ausgelegt ist, dass sie bei Empfang von Informationen über das Vorhandensein der reinen Broadcast-Telekommunikationszelle von einer Zellularbasisstation (202, 302-1...302-n), die eine gegenwärtig in Betrieb befindliche Zweiweg-Telekommunikationszelle (204, 304-1...304-n) mit einem wesentlichen größeren Versorgungsbereich als der Zugangsbereich des Zugangspunkts und als die reine Broadcast-Telekommunikationszelle betreibt, den Eintritt in den Betriebsmodus aktiviert, wobei der Empfang Informationen über die reine Broadcast-Telekommunikationszelle umfasst, die sich im Wesentlichen innerhalb der gegenwärtig in Betrieb befindlichen Telekommunikationszelle befindet.

9. Mobilstation nach Anspruch 8, die ferner so ausgelegt ist, dass sie Zugang zum GAN startet, wenn die Broadcast-Informationen über den Zugangspunkt von der reinen Broadcast-Zellularbasisstation empfangen werden.

10. Mobilstation nach einem der Ansprüche 8 oder 9, die ferner so ausgelegt ist, dass sie per Broadcast gesendete Werbeinformationen von der reinen Broadcast-Zellularbasisstation empfängt.

11. Mobilstation nach einem der Ansprüche 8 oder 9, die ferner so ausgelegt ist, dass sie eine Nachbarzellenliste empfängt, welche Informationen über die reine Broadcast-Telekommunikationszelle umfasst.

12. Telekommunikationssystem, umfassend:
eine Anordnung nach einem der Ansprüche 5 bis 7; und
mindestens eine Mobilstation (110, 206-1...206-m) nach einem der Ansprüche 8 bis 11, die so ausgelegt ist, dass sie mit der Zellularbasisstation und dem Zugangspunkt arbeitet.

13. Telekommunikationssystem nach Anspruch 12, ferner umfassend:
mindestens eine andere Zellularbasisstation (202, 302-1...302-n), die ausgelegt ist, dass sie eine Zelle (204, 304-1...304-n) für Telekommunikation betreibt, wobei die andere Zellularbasisstation Informationen über die reine Broadcast-Telekommunikationszelle bereitstellt, wobei sich die reine Broadcast-Telekommunikationszelle im Wesentlichen innerhalb eines Bereichs der Zelle für Telekommunikation befindet, und wobei die Zelle für Telekommunikation einen wesentlich größeren Versorgungsbereich als der Zugangsbereich des Zugangspunkts und als die reine Broadcast-Telekommunikationszelle aufweist.

14. Computerprogramm, umfassend Anweisungen, welche so ausgelegt sind, dass sie, wenn durch einen Prozessor ausgeführt, den Prozessor veranlassen, das Verfahren nach einem der Ansprüche 1 bis 4 auszuführen.

## Revendications

1. Procédé comprenant :
la mise en oeuvre d'une station de base cellulaire (102, 400, 600), la mise en oeuvre consistant à
fournir une synchronisation (700) pour des stations mobiles (110, 206-m) ; et
diffuser (702), à partir de la station de base cellulaire, des informations comprenant des informations concernant un point d'accès (104), lequel point d'accès permet une communication par accès mobile sans licence, UMA, par une technologie de réseau local sans fil ou Bluetooth
**caractérisé en ce que** la station de base cellulaire met en oeuvre une cellule de télécommunication à diffusion pure (106, 306-1 ... 306-p), dans laquelle une zone d'accès (108) du point d'accès et la cellule de télécommunication à diffusion pure couvrent sensiblement la même zone, de sorte que des stations mobiles susceptibles de recevoir les informations diffusées prennent conscience d'une accessibilité au point d'accès.

2. Procédé selon la revendication 1, dans lequel les informations diffusées comprennent en outre des informations publicitaires.

3. Procédé selon la revendication 1 ou 2, comprenant en outre :
la fourniture d'informations concernant la cellule de télécommunication à diffusion pure par une autre station de base cellulaire (202, 302-1 ... 302-n) mettant en oeuvre une autre cellule de télécommunication (204, 304-1 ... 304-n), dans laquelle l'autre cellule de télécommunication a une zone de couverture considérablement plus grande que la zone d'accès du point d'accès et que la cellule de télécommunication à diffusion pure, et la cellule à diffusion pure est sensiblement située à l'intérieur de l'autre cellule de télécommunication.

4. Procédé selon la revendication 3, dans lequel la fourniture d'informations concernant la cellule de télécommunication à diffusion pure comprend en outre :
l'inclusion (800) de la cellule de télécommunication à diffusion pure à l'intérieur d'une liste de cellules voisines ; et
la fourniture (802) de la liste de cellules voisines à des stations mobiles à l'intérieur ou au voisinage de l'autre cellule de télécommunication.

5. Agencement comprenant un point d'accès (104) et une station de base cellulaire (102, 400, 600) comprenant un émetteur agencé pour diffuser des informations concernant le point d'accès (104), lequel point d'accès permet une communication par accès mobile sans licence, UMA, par une technologie de réseau local sans fil ou Bluetooth
**caractérisé en ce que** la station de base cellulaire est agencée pour mettre en oeuvre une cellule de télécommunication à diffusion pure (106, 306-1 ... 306-p), et la station de base cellulaire est agencée avec le point d'accès de sorte que la cellule de télécommunication à diffusion pure et une zone d'accès (108) du point d'accès couvrent sensiblement la même zone.

6. Agencement selon la revendication 5, dans lequel
la cellule de télécommunication à diffusion pure est agencée sensiblement à l'intérieur d'une autre cellule de télécommunication (204, 304-1 ... 304-n) mise en oeuvre par une autre station de base cellulaire (202, 302-1 ... 302-n),
l'autre cellule de télécommunication ayant une zone de couverture considérablement plus grande que la zone d'accès du point d'accès et que la cellule de télécommunication à diffusion pure, et
des informations concernant la cellule de télécommunication à diffusion pure sont fournies en provenance de l'autre station de base cellulaire de l'autre cellule de télécommunication,

7. Agencement selon la revendication 5 ou 6, agencé en outre pour diffuser des informations publicitaires.

8. Station mobile (110, 206-1 ... 206-m) ayant à la fois des capacités pour une communication cellulaire et pour une communication par accès mobile sans licence, UMA, la station mobile ayant un certain mode de fonctionnement,
**caractérisé en ce que** la station mobile est agencée, en fonctionnant dans le certain mode de fonctionnement, pour
synchroniser avec une station de base cellulaire à diffusion pure (102, 400, 600) ; et
recevoir une messagerie diffusée en provenance de la station de base cellulaire à diffusion pure concernant un point d'accès (104), lequel point accès permet une communication UMA par une technologie de réseau local sans fil ou Bluetooth, à partir de la station de base à diffusion pure mettant en oeuvre une cellule de télécommunication à diffusion pure (106, 306-1 ... 306-p) dans laquelle une zone d'accès (108) du point d'accès et la cellule de télécommunication à diffusion pure couvrent sensiblement la même zone de sorte que lorsque la station mobile est susceptible de recevoir les informations diffusées, elle prend conscience d'une accessibilité au point d'accès, dans laquelle
la station mobile est en outre agencée pour permettre l'entrée dans le mode de fonctionnement lors de la réception d'informations concernant la présence de la cellule de télécommunication à diffusion pure en provenance d'une station de base cellulaire (202, 302-1 ... 302-n) mettant en oeuvre une cellule de télécommunication à fonctionnement actuellement bilatéral (204, 304-1 ... 304-n) ayant une zone de couverture considérablement plus grande que la zone d'accès du point d'accès et que la cellule de télécommunication à diffusion pure, la réception comprenant des informations concernant la cellule de télécommunication à diffusion pure située sensiblement à l'intérieur de la cellule de télécommunication actuellement en fonctionnement.

9. Station mobile selon la revendication 8, agencée en outre pour commencer à accéder à l'UMA lorsque les informations diffusées concernant le point d'accès sont reçues en provenance de la station de base cellulaire à diffusion pure.

10. Station mobile selon l'une quelconque des revendications 8 ou 9, agencée en outre pour recevoir des informations publicitaires diffusées en provenance de la station de base cellulaire à diffusion pure.

11. Station mobile selon l'une quelconque des revendications 8 ou 9, agencée en outre pour recevoir une liste de cellules voisines comprenant des informations concernant la cellule de télécommunication à diffusion pure.

12. Système de télécommunication comprenant :
un agencement selon l'une quelconque des revendications 5 à 7 ; et
au moins une station mobile (110, 206-1 ... 206-m) selon l'une quelconque des revendications 8 à 11 agencée pour fonctionner avec la station de base cellulaire, et le point d'accès.

13. Système de télécommunication selon la revendication 12, comprenant en outre :
au moins une autre station de base cellulaire (202, 302-1 ... 302-n) agencée pour mettre en oeuvre une cellule (204, 304-1 ... 304-n) pour la télécommunication, l'autre station de base cellulaire fournissant des informations concernant la cellule de télécommunication à diffusion pure, dans laquelle la cellule de télécommunication à diffusion pure est située sensiblement à l'intérieur d'une zone de la cellule pour télécommunication, et dans laquelle la cellule pour télécommunication a une zone de couverture considérablement plus grande que la zone d'accès du point d'accès et que la cellule de télécommunication à diffusion pure.

14. Programme informatique comprenant des instructions, qui, lorsqu'elles sont exécutées par un processeur, sont agencées pour amener le processeur à effectuer le procédé selon l'une quelconque des revendications 1 à 4.
